# EUROPEAN PATENT APPLICATION

(11) **EP 4 068 136 A1**
(43) Date of publication of application: **05.10.2022**
(21) Application number: 21166860.3
(22) Date of filing: 02.04.2021
(51) Int. Cl.: G06F 30/20, B33Y 50/00, G06F 113/10, G06F 119/14

(54) **METHOD AND SYSTEM FOR CUSTOMIZING LATTICE STRUCTURES FOR DIGITAL MANUFACTURING**

(71) Applicant: Twikit NV, 2600 Berchem (BE)
(72) Inventor: De Deken, Olivier, 2600 Berchem (BE); De Breuck, Dave, 2100 Deurne (BE)
(74) Representative: IP HILLS NV

(57) **Abstract**

A computer-implemented method for designing a customized lattice structure (1) for digital manufacturing, wherein said computer-implemented method comprises the steps of:
- receiving a three-dimensional volume (10);
- receiving one or more lattice configurations (100) configured to fill said three-dimensional volume (10);
- receiving one or more user-defined design rules (200) configured to modify a type (101) and/or a geometry (102) of said lattice configurations (100);
- populating said three-dimensional volume (10) based on said lattice configurations (100); and
- applying one or more of said user-defined design rules (200) onto said populated lattice configurations (100), thereby generating customized lattice configurations and forming said customized lattice structure (1).

## Description

### Technical Field

The present invention generally relates, amongst others, to a computer-implemented method for creating three-dimensional lattice structures. More particularly, it relates to automatically designing, generating, and/or modeling individualized lattice structures for digital manufacturing.

### Background

Several engineering fields, such as for example aerospace engineering, sports engineering, biomedical engineering, etc., strive to design and manufacture lightweight products which still provide high structural and mechanical performance. The designs, materials and manufacturing processes of these lightweight products are permanently in evolution to explore and get mass optimization solutions at low cost. An example of such materials is foams. Foams demonstrate a varied range of properties while reducing weight, which makes them a backbone in construction sites, oil and gas channels, manufacturing industry and specifically, spacecraft and aircraft. In aerospace engineering, polyurethane foam is for example widely used in rigid foam insulation panels of the aircraft, its ceilings and walls, and baggage sections. In sports engineering, foams can for example deliver soft and smooth cushioning for running, training, trail or gym, when integrated in the sole of sports shoes. In biomedical engineering, biomedical and/or biodegradable foams able to mimic the biochemical and biophysical cues of organic tissue.

Lattice structures are an example of an alternative to foam. Lattice structures are porous materials produced by for example repeating arrangements of shapes in a grid-like pattern or other pattern of repeated shapes that replace a solid volume or other random patterns generated by a collection of points within a solid volume. For example, lattice structures are grid-like structures which can behave as springs and/or as dampeners. A lattice region is for example defined as a part of a lattice structure where a portion of the volume has been replaced with an appropriate lattice that comprises a pattern of cell shapes, such as for example unit cells, throughout the structure. A key advantage of such cellular materials is that they can offer high structural and mechanical strength with a relatively low mass. Lattice structures can also be made very flexible and fully reformable after compression. Lattice structures can further provide good energy absorption characteristics and good thermal and acoustic insulation as well. Additionally, lattice structures offer superior breathability than foams, further increasing the suitability of lattice structures for biomedical applications such as for prosthesis and artificial limbs for example.

Lattice structures may be designed and modelled using digital manufacturing. Digital manufacturing is the application of computer systems to manufacturing services, supply chains, products and processes. Current computer aided engineering technology, or computer aided design known as CAD, can be used for designing, modelling, and manufacturing lattice structures. Digital manufacturing technology is also perfectly aligned for incorporation into automated processes such as additive manufacturing, laminated object manufacturing, Computer Numerical Control or CNC cutting, milling, lathing, etc.

However, due to their complexity, lattice structures remain difficult to generate and/or to model with existing CAD design and modelling tools.

### Summary

Using foams, it is often difficult to design and manufacture components with varying mechanical properties. Indeed, foams are typically homogeneous materials and typically have a homogenous density distribution. For example, it is very challenging to achieve mechanical damping in the millimetre range with foams. From a mechanical engineering viewpoint, the concept of designed lattice structures is motivated by the desire to put material only where it is needed for a specific application.

A primary need for lattice structures is therefore motivated by the desire to create lightweight functional parts of a product, wherein the lightweight functional parts demonstrate different structural strengths, thereby individualizing, customizing and personalizing the lattice structure.

It is thus an object of embodiments of the present invention to propose a computer-implemented method and a system which do not show the inherent shortcomings of the prior art. More specifically, it is an object of embodiments of the present invention to propose a method and a system to automatically design and generate individualized lattice structures in a simple and reliable manner, while guaranteeing mechanical properties of the individualized lattices structures.

The scope of protection sought for various embodiments of the invention is set out by the independent claims.

The embodiments and features described in this specification that do not fall within the scope of the independent claims, if any, are to be interpreted as examples useful for understanding various embodiments of the invention.

There is a need for a computer-implemented method which improves products by allowing individualization of the design of lattice structures while guaranteeing the structural and the mechanical properties of the lattice structures.

Amongst others, it is an object of embodiments of the invention to enable a computer-implemented method to customize lattice structures and to render the customized lattice structures through web-based and mobile applications.

This object is achieved, according to a first example aspect of the present disclosure, by a computer-implemented method for designing a customized lattice structure for digital manufacturing, wherein the computer-implemented method comprises the steps of:
- receiving a three-dimensional volume;
- receiving one or more lattice configurations configured to fill the three-dimensional volume;
- receiving one or more user-defined design rules configured to modify a type and/or a geometry of the lattice configurations;
- populating the three-dimensional volume based on the lattice configurations; and
- applying one or more of the user-defined design rules onto the populated lattice configurations, thereby generating customized lattice configurations and forming the customized lattice structure.

The computer-implemented method according to the present disclosure allows to create individualized lattice structures based on unique user input. Thanks to the computer-implemented method according to the present disclosure, a designer of the customized lattice structure has full control over the general outer shape of the customized lattice structure and on how the three-dimensional volume of the customized lattice structure is populated. This way, the computer-implemented method according to the present disclosure allows the designer to automatically form the customized lattice structure such that one or more regions or parts of the customized lattice structure demonstrate similar or different mechanical properties expected by the designer once the customized lattice structure is manufactured. The computer-implemented method according to the present disclosure uses user-defined design rules to automatically modify a type and/or a geometry of the lattice configurations arranged within the volume of the customized lattice structure. In other words, the computer-implemented method according to the present disclosure allows to automatically individualize the design of one or more parts of the lattice structure within the three-dimensional volume, thereby creating a customized lattice structure, and the computer-implemented method according to the present disclosure automatically adapts the changes requested by the user-defined design rules onto the lattice structure dynamically. Each user-defined design rule according to the present disclosure is configured to modify a type and/or a geometry of one or more of the lattice configurations. Modifying the type and/or the geometry of one or more lattice configurations has a direct impact on the mechanical characteristics of the generated customized lattice structure, thereby optimizing the design of the customized lattice structure to match the design desired by the user.

For example, when designing a lattice structure forming a sole of a running shoe or a bike helmet or a bike saddle, the computer-implemented method according to the present disclosure provides enhanced energy absorption characteristics in order to dampen shocks or vibrations. One or more user-defined rules will therefore be applied onto the lattice configurations which are present in regions where enhanced energy absorption is required according to the user-defined design rules. For lattice structures which are used for example in high temperature operating environments, such as for example in proximity to machinery and engines, the computer-implemented method according to the present disclosure allows to minimize the material necessary for manufacturing the customized lattice structure, thereby increasing the surface area available for heat dissipation. One or more user-defined rules will therefore be applied onto the lattice configurations which are present in regions where the surface area available for heat dissipation is required to be increased according to the user-defined design rules such that for example a density of the lattice configurations in these regions is lowered. For lattice structures which are used for example for biomedical applications, such as for example in prosthesis, the computer-implemented method according to the present disclosure allows to personalize the design of the customized lattice structure up to a millimetre range. A customized lattice structure for a prosthesis can therefore demonstrate more damping and/or more bounce and/or more elasticity in one or more regions of the prosthesis which correspond to one or more pressure points applied onto the artificial limb. The computer-implemented method according to the present disclosure thereby significantly improves fit and comfort of the patient wearing the prosthesis.

In the context of the present disclosure, a customized lattice structure comprises a three-dimensional volume surrounded by an outer surface. The three-dimensional volume is enclosed within an outer surface of the customized lattice structure. The three-dimensional volume is populated by one or more lattice configurations of the customized lattice structure. In other words, one or more lattice configurations are arranged within the three-dimensional volume of the customized lattice structure, i.e. one or more lattice configurations are configured to populate the three-dimensional volume of the customized lattice structure. Each lattice configuration comprises for example a repeated arrangement of shapes in a grid-like pattern or other pattern of repeated shapes that replace the solid volume within the three-dimensional volume of the customized lattice structure, and/or comprises for example one or more random patterns formed by a collection or set of points within the solid volume. Preferably, the outer surface of the three-dimensional volume populated with lattice configurations remains unchanged even after the user-defined design rules are applied onto lattice configurations. In other words, an outer shape of the customized lattice structure remains the same between the shape defined by the outer surface of the three-dimensional volume and the shape of the outer surface of the customized lattice structure comprising customized lattice configurations. Alternatively, an outer surface of the three-dimensional volume populated with lattice configurations may change as one or more user-defined rules are applied onto the lattice configurations, i.e. as one or more customized lattice configurations are generated.

In the context of the present disclosure, a type of a lattice configuration is grid-based and the lattice configuration then comprises a plurality of unit cells repeated according to a grid structure within a volume of the lattice configuration. Another type of a lattice configuration in the context of the present disclosure is Voronoi-based. Another type of a lattice configuration in the context of the present disclosure is Delaunay-based. In the context of the present invention, a lattice configuration comprises any suitable lattice configuration configured to populate the three-dimensional volume. For example, the three-dimensional volume comprises two different types of lattice configurations, such that for example one or more regions or parts of the three-dimensional volume are populated with a grid-based lattice configuration, while other regions or parts of the same three-dimensional volume are populated with a Voronoi-based lattice configuration. Alternatively, the three-dimensional volume comprises two different types of lattice configurations, such that for example one or more regions or parts of the three-dimensional volume are populated with a grid-based lattice configuration, while other regions or parts of the same three-dimensional volume are populated with a Delaunay-based lattice configuration. Alternatively, the three-dimensional volume comprises two different types of lattice configurations, such that for example one or more regions or parts of the three-dimensional volume are populated with a Voronoi-based lattice configuration, while other regions or parts of the same three-dimensional volume are populated with a Delaunay-based lattice configuration. Alternatively, the three-dimensional volume comprises several different types of lattice configurations, such as two, three, four, five, six, etc. different types of lattice configurations.

According to example embodiments, the computer-implemented method further comprises the steps of:
- receiving one or more mechanical forces to be applied onto the lattice configurations and respective locations on the lattice configurations;
- mapping the mechanical forces to their respective locations;
- determining displacements and stress values generated in the lattice configurations by the mechanical forces;
- determining type derivatives and/or geometry derivatives for the lattice configurations based on the displacements and the stress values; and
- generating the user-defined design rules, wherein each user-defined design rule is configured to:
   ∘ modify the type of one or more of the lattice configurations to the type derivative; and/or
   ∘ modify the geometry of one or more of the lattice configurations to the geometry derivative.

This way, one or more mechanical properties of the lattice configurations are taken into account when generating the user-defined design rules. The computer-implemented method simulates and determines displacements and stress values generated by the mechanical forces in the lattice configurations over time. In other words, at one or more points in time during which the mechanical forces are being exerted onto the three-dimensional volume populated with the lattice configurations, the computer-implemented method determines the structural changes generated by the mechanical forces on the lattice configurations. The computer-implemented method determines over time the displacements and the stress values for the lattice configurations which comprise the respective locations of the mechanical forces. The computer-implemented method may also determine over time the displacements and the stress values for the lattice configurations which are adjacent to lattice configurations onto which the mechanical forces are applied at the respective locations, thereby obtaining an overview of the determination of the impact of the mechanical forces onto the lattice configurations.

A type derivative corresponds to another type of lattice configuration, such as for example, grid-based or Voronoi-based or Delaunay-based. A geometry derivative corresponds to another geometry for the lattice configurations, such as for example, different dimensions for the unit cells of a grid-based lattice configuration, or different positions for the points or density of the points of a Voronoi-based or Delaunay-based lattice configuration.

Depending on the displacements and/or the stress values determined by the computer-implemented method, one or more user-defined design rules are generated. For example, when the computer-implemented method determines a stress value which exceeds an elasticity threshold of a unit cell of a lattice configuration, wherein the elasticity threshold of the unit cell is provided by the user or by simulation, the computer-implemented method generates a user-defined design rule which is configured to modify the dimensions of the unit cell, thereby modifying the geometry of the lattice configuration to a geometry derivative. Alternatively, for example, when the computer-implemented method determines that a different type of lattice configurations is necessary to withstand the mechanical forces inputted, the computer-implemented method generates a user-defined design rule which is configured to modify the type of one or more of the lattice configurations onto which the mechanical forces are applied, thereby modifying the type of these lattice configurations to a type derivative. A customized lattice configuration comprises a type derivative and a geometry derivative. The type derivative and/or the geometry derivative of each of the customized lattice configurations are defined by one or more of the user-defined design rules.

The mechanical forces may be applied one by one at their respective locations onto the lattice configurations. Alternatively, one or more mechanical forces may be applied at their respective locations onto the lattice configurations simultaneously. Alternatively, all the mechanical forces may be applied at their respective locations onto the lattice configurations simultaneously. Displacements and stress values generated over time in the lattice configurations by the mechanical forces may be determined when the mechanical forces are applied one by one onto the lattice configurations for example at one or more points in time. Alternatively, displacements and stress values generated over time in the lattice configurations by the mechanical forces may be determined when one or more or all the mechanical forces are applied onto the lattice configurations simultaneously for example at one or more points in time. A mechanical force in the context of the present disclosure can be defined as a force that features some direct contact between two components, wherein one of the components is an outer surface of the three-dimensional volume populated with lattice configurations which is in a state of rest or in a state of motion and another component which is applying the force mechanical, and which results in the production of a change in the state of the three-dimensional volume populated with one or more lattice configurations. For example, the other component corresponds to the outer surface of an object and/or any suitable external force which is exerted on the outer surface of the three-dimensional volume populated with one or more lattice configurations. A mechanical force in the context of the present disclosure can be defined as thermal stress. As understood in the context of mechanics and thermodynamics, thermal stress is mechanical stress created by any change in temperature of a material of the three-dimensional volume populated with lattice configurations. These stresses can lead to fracturing or plastic deformation depending on the other variables of heating, which include material types and constraints. Temperature gradients, thermal expansion or contraction and thermal shocks are phenomena that can lead to thermal stress. This type of stress is highly dependent on the thermal expansion coefficient which varies from material to material. A mechanical force in the context of the present disclosure can be defined as an aerodynamic force which is exerted on the three-dimensional volume populated with lattice configurations by air or any other gas in which the three-dimensional volume populated with lattice configurations is immersed and is due to the relative motion between the three-dimensional volume populated with lattice configurations and the gas. A mechanical force in the context of the present disclosure can be defined as a hydrodynamic force which corresponds to the fluid shearing and pressure forces onto the three-dimensional volume populated with lattice configurations. Hydrodynamic forces arise from fluid particle velocity and acceleration.

A displacement corresponds to the distance moved by a point of a lattice configuration in a specific direction within the three-dimensional volume. The distance travelled by the point depends on the path that it follows within the three-dimensional volume; it will be equal to the magnitude of the displacement only if the path is straight. Displacement is a vector quantity because it has both magnitude and direction. A displacement can be indicative for an elongation of the lattice configuration resulting from the mechanical forces or can be indicative for a compression of the lattice configuration resulting from the mechanical forces.

A stress value comprises information indicative for a physical quantity that expresses the internal forces that neighbouring points of a lattice configuration exert on each other, while strain is the measure of the deformation of the lattice configuration. The computer-implemented method determines one or more stress values generated in the lattice configurations by the mechanical forces and can determine strain generated in one or more of the lattice configurations by the mechanical forces.

The user-defined design rules are generated based on unique user input. The mechanical forces to be applied onto the lattice configurations and their respective locations are indeed provided to the computer-implemented method as unique user input. A mechanical force is modelled by the computer-implemented method using parametrized representative elements. A mechanical force is applied onto the outer surface of the three-dimensional volume populated by the lattice configurations. For example, a mechanical force comprises an orientation of the mechanical force with respect to a plane tangent to the outer surface of the three-dimensional volume at a respective location of the corresponding mechanical force.

This way, the user-defined design rules are generated by the computer-implemented method. The user-defined design rules may be manually generated and/or applied by a user of the computer-implemented method when performing the steps of the computer-implemented method according to the present disclosure. Artificial intelligence may generate and/or apply the user-defined design rules based on the mechanical forces provided by a user.

According to example embodiments, the computer-implemented method further comprises the steps of:
- receiving a predetermined mechanical characteristic for the customized lattice structure;
- receiving one or more lattice mechanical forces to be applied onto the customized lattice structure and respective lattice locations on the customized lattice structure;
- mapping the lattice mechanical forces to their respective lattice locations;
- determining displacements and stress values generated in the customized lattice structure by the lattice mechanical forces, thereby evaluating a mechanical characteristic of the customized lattice structure;
- updating one or more user-defined design rules, thereby generating one or more updated user-defined design rules, and applying said updated user-defined design rules onto the customized lattice configurations when the mechanical characteristic of the customized lattice structure is different from the predetermined mechanical characteristic, until the mechanical characteristic of the customized lattice structure corresponds to the predetermined mechanical characteristic, thereby updating the customized lattice configurations; and
- updating the customized lattice structure using the updated customized lattice configurations.

This way, the computer-implemented method allows to simulate and check whether the created customized lattice structure complies with one or more mechanical properties which are expected of the customized lattice structure once the customized lattice structure is manufactured.

Once the customized lattice structure has been created, the computer-implemented method further comprises simulating lattice mechanical structures being applied onto the customized lattice structure and further determining displacements and stress values generated by these mechanical forces in the lattice configurations over time. In other words, at one or more points in time during which the lattice mechanical forces are being exerted onto the customized lattice structure populated with the customized lattice configurations, the computer-implemented method determines the structural changes generated by the lattice mechanical forces on the customized lattice configurations for example at one or more points in time. A lattice mechanical force in the context of the present disclosure can be defined as a force that features some direct contact between two components, wherein one of the components is an outer surface of the customized lattice structure which is in a state of rest or in a state of motion and another component which is applying the force mechanical, and which results in the production of a change in the state of the customized lattice structure. For example, the other component corresponds to the outer surface of an object and/or any suitable external force which is exerted on the outer surface of the customized lattice structure. A lattice mechanical force in the context of the present disclosure can be defined as thermal stress. As understood in the context of mechanics and thermodynamics, thermal stress is mechanical stress created by any change in temperature of a material of the customized lattice structure. These stresses can lead to fracturing or plastic deformation depending on the other variables of heating, which include material types and constraints. Temperature gradients, thermal expansion or contraction and thermal shocks are phenomena that can lead to thermal stress. This type of stress is highly dependent on the thermal expansion coefficient which varies from material to material. A lattice mechanical force in the context of the present disclosure can be defined as an aerodynamic force which is exerted on the three-dimensional volume populated with lattice configurations by air or any other gas in which the customized lattice structure is immersed and is due to the relative motion between the customized lattice structure and the gas. A lattice mechanical force in the context of the present disclosure can be defined as a hydrodynamic force which corresponds to the fluid shearing and pressure forces onto the customized lattice structure. Hydrodynamic forces arise from fluid particle velocity and acceleration.

Preferably, the outer surface of the three-dimensional volume populated with customized lattice configurations remains unchanged even after the updated user-defined design rules are applied onto the customized lattice configurations. In other words, an outer shape of the customized lattice structure remains the same between the shape defined by the outer surface of the three-dimensional volume comprising customized lattice configurations and the shape of the outer surface of the customized lattice structure comprising updated customized lattice configurations. Alternatively, an outer surface of the three-dimensional volume populated with customized lattice configurations may change as one or more updated user-defined rules are applied onto the customized lattice configurations, i.e. as one or more updated customized lattice configurations are generated.

According to example embodiments, the computer-implemented method further comprises the steps of:
- receiving one or more production characteristics for the customized lattice structure; and
- evaluating the mechanical characteristic of the customized lattice structure based on the production characteristics.

One or more production characteristics for example comprise information indicative for a material in which one or more customized lattice configurations are to be manufactured. For example, a material can be polymer, metal, resin, thermoplastic, titanium, steel, carbon, graphene, etc., or any other suitable material. For example, a production characteristic may comprise information indicative for the elasticity of a first polymer in which one lattice configuration is to be manufactured and may comprise information indicative for the elasticity of a second polymer in which another lattice configuration different from the previous one is to be manufactured. Production characteristics may also comprise technical information about the method used to manufacture the customized lattice structure. For example, a complex design of a customized lattice structure may easily be 3D printed, while it may be possible to manufacture this complex design with Computer Numerical Control or CNC cutting. The computer-implemented method takes one or more of these production characteristics into account when determining the displacements and the stress values generated in the customized lattice structure by the lattice mechanical forces.

According to example embodiments, the mechanical forces and/or the lattice mechanical forces comprise one or more of:
- user-defined pressure maps;
- user-defined force fields;
- user-defined digital representations of the mechanical forces and/or of the lattice mechanical forces.

The mechanical forces and/or the lattice mechanical forces may for example model repetitive stress applied onto the lattice configurations. Alternatively, mechanical forces and/or the lattice mechanical forces may for example model impact shocks endured by the lattice configurations.

Pressure mapping for example corresponds to the measurement and visual reporting of pressure between two contacting surfaces. One of these contacting surfaces corresponds to the outer surface of the three-dimensional volume populated with one or more lattice configurations. The other contacting surface corresponds to the outer surface of an individual and/or an object and/or any suitable external force which is exerted on the outer surface of the three-dimensional volume. In many applications, for example in the medical field, pressure mapping technology is used to visualize the contact pressure distribution between for example the human body and a supporting surface such a seat or a mattress. In the context of the present disclosure, a user-defined force field is for example a vector field that describes a non-contact force acting on the three-dimensional volume populated by lattice configurations or on the customized lattice structure at various positions in space. In the context of the present disclosure, a user-defined digital representation of a force for example comprises an arrow and/or a color and/or vertices and/or any suitable code indicative for an orientation and/or a magnitude of the force.

According to example embodiments, the computer-implemented method further comprises the steps of:
- receiving user-defined regions within the three-dimensional volume; and
- modifying the type and/or the geometry of the lattice configurations in one or more user-defined regions by applying the one or more user-defined design rules only in the user-defined regions.

This way, the computer-implemented method allows to automatically modify several parts of one or more lattice configurations simultaneously instead of updating the lattice configurations one by one. This saves time and facilitates the customization of the lattice structure. For example, a modification of a lattice configuration may be automatically repeated towards comparable lattice configurations.

According to example embodiments, one or more of the lattice configurations comprise a user-defined grid structure comprising a plurality of unit cells; and wherein the computer-implemented method further comprises the step of generating customized grid structures comprising a plurality of customized unit cells when applying the user-defined design rules onto the lattice configurations.

In the context of the present disclosure, a lattice structure is modelled using parametrized representative elements. For example, one or more lattice configurations comprise a user-defined grid structure, wherein a plurality of interconnected unit cells are arranged within the user-defined grid structure. Each unit cell corresponds to a three-dimensional shape comprising a plurality of struts defining the three-dimensional shape and further comprises a plurality of nodes at which the struts are connected. A type of a lattice configuration in this case is grid-based and comprising a plurality of unit cells. A geometry of a lattice configuration in this case comprises the dimensions of a unit cell, such as for example its length, width, and/or depth. A geometry of a lattice configuration in this case may also for example comprise one or more thicknesses of the struts of the unit cells. A geometry of the lattice configuration in this case may also for example comprise a shape of the three-dimensional shape, such as for example a cross, a cube cross, an octahedron, a tetra-octahedron, a cube, any suitable shape of polygon. The user-defined design rules according to the present disclosure are configured to modify for example the stacking density of the unit cells within the user-defined grid structure, thereby modifying the geometry of the corresponding lattice configuration. For example, the user-defined design rules are configured to reduce the density of the unit cells within the user-defined grid structure, thereby making the lattice configuration loose. On the other hand, the user-defined design rules may be configured to increase the density of the unit cells within the user-defined grid structure, thereby making the lattice configuration dense. The user-defined design rules according to the present disclosure may also be configured to modify the shape of the unit cells within the user-defined grid structure, such as for example the dimensions of the unit cells within the user-defined grid structure.

According to example embodiments, the customized grid structure is regular throughout the three-dimensional volume of the customized lattice structure.

According to example embodiments, the customized grid structure is non-regular throughout the three-dimensional volume of the customized lattice structure and allows for a free flow population of the customized grid structure.

This way, the dimensions of the unit cells vary throughout the three-dimensional volume. For example, a width and/or a length and/or a depth of the unit cells and/or a thickness of one or more struts may freely vary throughout the three-dimensional volume, unlocking tremendous degrees of freedom in the design of the customized lattice structure. Optionally, the non-regular customized grid structure follows an outer surface of the three-dimensional volume.

According to example embodiments, the customized grid structure follows an outer surface of the three-dimensional volume.

This way, a complete control over the outer surface of the customized lattice structure is guaranteed. Even when modifying one or more lattice configurations, the computer-implemented method ensures the outer surface of the three-dimensional volume remains a match to the initial outer surface of the three-dimensional volume not yet populated by the lattice configurations. Even when modifying one or more lattice configurations, it will preferably not happen, for example for a grid-based lattice configuration, that unit cells are cut open, leaving dangling bonds on the outer surface of the three-dimensional volume risking making it impossible to 3D print the customized lattice structure and jeopardizing the outer look of the final product. Alternatively, the three-dimensional volume may be populated by one or more grid-based lattice configurations such that one or more customized grid structures are regular throughout the three-dimensional volume and then cut with the outer surface of the three-dimensional volume, thereby resulting in unit cells cut open and dangling bonds on the outer surface of the three-dimensional volume. Non-connected struts of the lattice configuration dangling at the outer surface of the three-dimensional volume may then be removed from the resulting customized lattice structure such that the customized lattice structure is rendered 3D printable.

According to example embodiments, one or more of the lattice configurations comprise a Voronoi-based lattice generation.

The user-defined design rules according to the present disclosure are configured to modify a type of lattice configuration. Alternatively, one or more lattice configurations comprise a Voronoi-based lattice generation. A type of a lattice configuration in this case is based on a Voronoi partition of the three-dimensional volume relying on the closest pair of points corresponding to two adjacent cells in a Voronoi diagram. The user-defined design rules according to the present disclosure are configured to modify for example the density of the pairs of points within the three-dimensional volume of the customized lattice structure, thereby modifying the geometry of the corresponding lattice configuration. For example, the user-defined design rules are configured to reduce the density of points within the three-dimensional volume of the customized lattice structure, thereby making the lattice configuration loose. On the other hand, the user-defined design rules may be configured to increase the density of points within the three-dimensional volume of the customized lattice structure, thereby making the lattice configuration dense. The user-defined design rules according to the present disclosure may also be configured to modify the relative distribution of the points with respect to each other within the three-dimensional volume of the customized lattice structure.

According to example embodiments, one or more of the lattice configurations comprise a Delaunay-based lattice generation.

The user-defined design rules according to the present disclosure are configured to modify a type of lattice configuration. Alternatively, one or more lattice configurations comprise a Delaunay-based lattice generation. A type of a lattice configuration in this case is based on the Delaunay triangulation of a discrete point set in general position which corresponds to the dual graph of the Voronoi diagram for the discrete point set. In this case, the circumcenters of Delaunay triangles are the vertices of the Voronoi diagram. The user-defined design rules according to the present disclosure are configured to modify for example the density of points within the discrete point set and/or their general positions within the three-dimensional volume of the customized lattice structure, thereby modifying the geometry of the corresponding lattice configuration. For example, the user-defined design rules are configured to reduce the density of points within the three-dimensional volume of the customized lattice structure, thereby making the lattice configuration coarse. On the other hand, the user-defined design rules may be configured to increase the density of points within the three-dimensional volume of the customized lattice structure, thereby making the lattice configuration dense. The user-defined design rules according to the present disclosure may also be configured to modify the relative distribution of the points with respect to each other within the three-dimensional volume of the customized lattice structure.

According to example embodiments, the computer-implemented method further comprises the steps of:
- generating a digital representation of the customized lattice structure; and
- incorporating a render of the digital representation in a web page of an HTML client and/or in a native application of a client device.

This way, the digital representation of the customized lattice structure may be rendered in a web page of a client browser. For example, the digital representation of the customized lattice structure is rendered using signed distance fields and functions which allow for web-based rendering. Alternatively, the digital representation of the customized lattice structure may be rendered in a native application of a client. The computer-implemented method is very versatile and can be used for personal usage on any suitable client device such as for example a personal computer or smartphone or tablet, and/or can be used for corporate usage in cloud-based lattice automation through an API connection for back-end automation. Computation time is herewith considerably reduced and allows modifications to be implemented and displayed instantly in real-time within the HTML client and/or within the native application. Within the web page of the HTML client and/or within the native application of the client device, it becomes possible with the computer-implemented method according to the present disclosure to easily add and/or remove slices to the customized lattice structure, to easily modify a type of lattice configuration and/or a geometry of the lattice configurations, such as for example increasing or decreasing a thickness of the struts, to easily increase and/or decrease a density of the points populating the three-dimensional volume of the customized lattice structure.

According to a second example aspect, a system for designing a customized lattice structure for digital manufacturing, wherein the computer-implemented method comprises the steps of:
- receiving a three-dimensional volume;
- receiving one or more lattice configurations configured to fill the three-dimensional volume;
- receiving one or more user-defined design rules configured to modify a type and/or a geometry of the lattice configurations;
- populating the three-dimensional volume based on the lattice configurations; and
- applying one or more of the user-defined design rules onto the populated lattice configurations, thereby generating customized lattice configurations and forming the customized lattice structure.

The system according to the present disclosure allows to create individualized lattice structures based on unique user input, wherein a user is a user of the system. Thanks to the system according to the present disclosure, a designer of the customized lattice structure has full control over the general outer shape of the customized lattice structure and on how the three-dimensional volume of the customized lattice structure is populated. This way, the system according to the present disclosure allows the designer to automatically form the customized lattice structure such that one or more regions or parts of the customized lattice structure demonstrate similar or different mechanical properties expected by the designer once the customized lattice structure is manufactured. The system according to the present disclosure uses user-defined design rules to automatically modify a type and/or a geometry of the lattice configurations arranged within the volume of the customized lattice structure. In other words, the system according to the present disclosure allows to automatically individualize the design of one or more parts of the lattice structure within the three-dimensional volume, thereby creating a customized lattice structure, and the system according to the present disclosure automatically adapts the changes requested by the user-defined design rules onto the lattice structure dynamically. Each user-defined design rule according to the present disclosure is configured to modify a type and/or a geometry of one or more of the lattice configurations. Modifying the type and/or the geometry of one or more lattice configurations has a direct impact on the mechanical characteristics of the generated customized lattice structure, thereby optimizing the design of the customized lattice structure to match the design desired by the user.

According to example embodiments, the system comprises a reinforcement learning kernel.

This way, the system according to the present disclosure comprises a meshless kernel to automatically create and individualize lattice structures. In the context of the present disclosure, reinforcement learning is an area of machine learning concerned with how intelligent software agents ought to take actions in an environment in order to maximize the notion of cumulative reward. Reinforcement learning focuses on finding a balance between exploration of for example uncharted territories and exploitation of for example current knowledge. A reinforcement learning kernel comprises a policy, a reward function, a value function and an optional model of the environment. The policy tells the software agent what to do in a certain situation. It can be for example a table of rules, or a complicated search for the correct action. Policies can even be for example stochastic, which means instead of rules the policy assigns probabilities to each action. A reward function defines the goal for a software agent. It takes in a state - or a state and the action taken at that state - and gives back a number called the reward, which tells the software agent how good it is to be in that state. The software agent's job is to get the biggest amount of reward it possibly can over time. If an action yields a low reward, the software agent will probably take a better action in the future. A value function tells a software agent how much reward it will get following a policy starting from a given state. It represents how desirable it is to be in a certain state. In the context of the present disclosure, during the training of the reinforcement learning kernel, the reinforcement learning kernel iteratively optimizes the design of the customized lattice structure to match the design desired by a user of the system. This way, the system according to the present disclosure automatically creates a customized lattice structure from the user-defined design rules, wherein the customized lattice structure optimally matches the design desired by the user of the system. Alternatively, the system comprises software comprising any suitable machine learning, or suitable artificial intelligence or suitable neural network to perform the steps of the method according to the present disclosure.

According to a third example aspect, a computer program product comprising computer-executable instructions for causing a system to perform at least the following:
- receiving a three-dimensional volume;
- receiving one or more lattice configurations configured to fill the three-dimensional volume;
- receiving one or more user-defined design rules configured to modify a type and/or a geometry of the lattice configurations;
- populating the three-dimensional volume based on the lattice configurations; and
- applying one or more of the user-defined design rules onto the populated lattice configurations, thereby generating customized lattice configurations and forming the customized lattice structure.

According to a fourth example aspect, a computer readable storage medium comprising computer-executable instructions for performing the following steps when the program is run on a computer:
- receiving a three-dimensional volume;
- receiving one or more lattice configurations configured to fill the three-dimensional volume;
- receiving one or more user-defined design rules configured to modify a type and/or a geometry of the lattice configurations;
- populating the three-dimensional volume based on the lattice configurations; and
- applying one or more of the user-defined design rules onto the populated lattice configurations, thereby generating customized lattice configurations and forming the customized lattice structure.

### Brief Description of the Drawings

Some example embodiments will now be described with reference to the accompanying drawings.
Fig. 1 depicts an example embodiment of a system according to the present disclosure.
Fig. 2 depicts an example embodiment of a computer-implemented method according to the present disclosure.
Fig. 3 shows an example embodiment of a three-dimensional volume populated with two lattice configurations according to the present disclosure.
Fig. 4 shows an example embodiment of a customized lattice structure according to the present disclosure.
Fig. 5 shows an example embodiment of a suitable computing system for performing one or several steps in embodiments of the invention.

### Detailed Description of Embodiment(s)

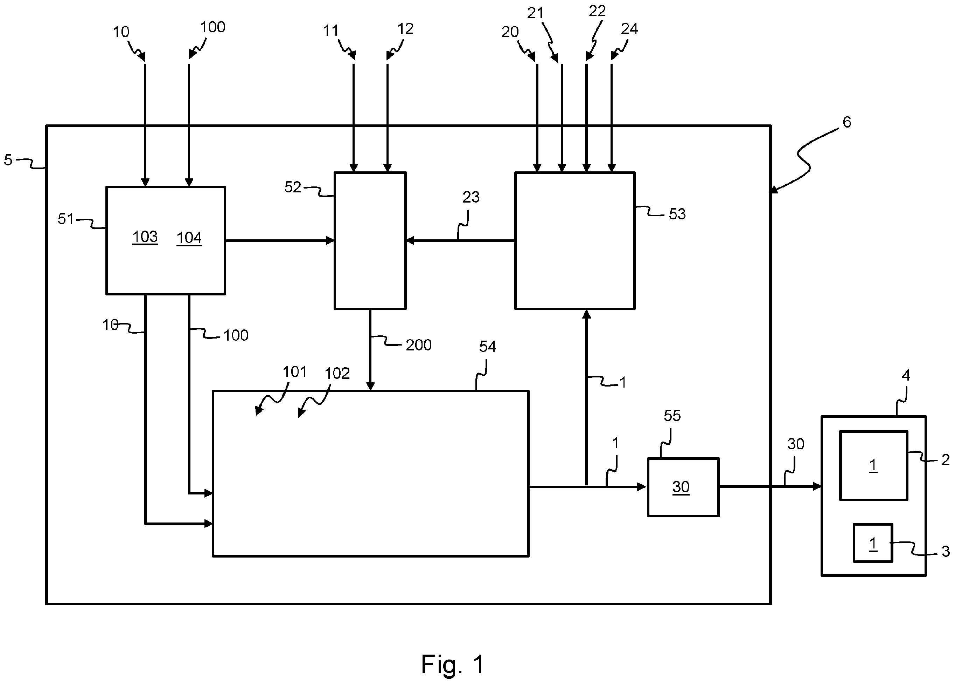

Fig. 1 illustrates an example embodiment of a system 5 according to the present disclosure. The system 5 comprises a reinforcement learning kernel 6. The system 5 comprises a first receiver 51 configured to receive a three-dimensional volume 10 and one or more lattice configurations 100 configured to fill or be arranged within the three-dimensional volume 10, thereby populating the three-dimensional volume 10. One or more of the lattice configurations 100 for example comprise a user-defined grid structure 103 comprising a plurality of unit cells 104. One or more of the lattice configurations 100 for example comprise a Voronoi-based lattice generation and/or a Delaunay-based lattice generation. The system 5 further comprises a second receiver 52 and an engine 54. The engine 54 is configured to receive one or more user-defined design rules 200 configured to modify a type 101 and/or a geometry 102 of the lattice configurations. The engine 54 is configured to populate the three-dimensional volume 10 based on the lattice configurations 100. The engine 54 is further configured to apply one or more of the user-defined design rules 200 onto the populated lattice configurations 100, thereby generating customized lattice configurations and forming the customized lattice structure 1. For example, when one or more of the lattice configurations 100 for example comprise a user-defined grid structure 103 comprising a plurality of unit cells 104, the engine 54 is configured to generate customized grid structures 103 comprising a plurality of customized unit cells 104 when applying one or more of the user-defined design rules 200 onto the corresponding lattice configurations 100. The customized grid structure 103 is for example regular throughout the three-dimensional volume 10 of the customized lattice structure 1. According to an alternative embodiment, the customized grid structure 103 is non-regular throughout the three-dimensional volume 10 of the customized lattice structure 1 and allows for a free flow population of the customized grid structure 103. The customized grid structure 103 may follow an outer surface 13 of the three-dimensional volume 10. The second receiver 52 is optionally configured to receive one or more mechanical forces 11 to be applied onto the lattice configurations 100 and respective locations 12 where the mechanical forces 11 must be applied on the lattice configurations 100. The mechanical forces 11 comprise for example one or more of the following: one or more user-defined pressure maps; one or more user-defined shapes; one or more user-defined force fields; one or more digital representations of the mechanical forces 11. The second receiver 52 optionally receives the lattice configurations 100 from the first receiver 51 and maps the mechanical forces 11 to their respective locations 12 onto the lattice configurations 100. The second receiver 52 then determines displacements and stress values generated at one or more points in time in the lattice configurations by the mechanical forces 11 at the respective locations 12. The second receiver 52 determines type derivatives and/or geometry derivatives for the lattice configurations 100 based on the displacements and the stress values. The second receiver 52 is configured to generate the user-defined design rules 200 wherein each user-defined design rule 200 is configured to modify the type 101 of one or more of the lattice configurations 100 to the type derivative and/or to modify the geometry 102 of one or more of the lattice configurations 100 to the geometry derivative. The system 5 further optionally comprises a third receiver 53. The third receiver 53 is configured to receive a predetermined mechanical characteristic 20 for the customized lattice structure 1. The third receiver 53 is further configured to receive one or more lattice mechanical forces 21 to be applied onto the customized lattice structure 1 and respective lattice locations 22 on the customized lattice structure 1 where the lattice mechanical forces 21 should be applied. The lattice mechanical forces 21 comprise for example one or more of the following: one or more user-defined pressure maps; one or more user-defined shapes; one or more user-defined force fields; one or more digital representations of the lattice mechanical forces 21. The third receiver 53 is further configured to map the lattice mechanical forces 21 to their respective locations 22 and to determine displacements and stress values generated in the customized lattice structure 1 by the lattice mechanical forces 21, thereby evaluating a mechanical characteristic 23 of the customized lattice structure 1. The third receiver 53 may provide the mechanical characteristic 23 of the customized lattice structure 1 to the second receiver 52 which updates one or more of the user-defined design rules 200 when the mechanical characteristic 23 of the customized lattice structure 1 is different from the predetermined mechanical characteristic 20. The second receiver 52 is configured to apply one or more of the updated user-defined design rules onto the customized lattice configurations when the mechanical characteristic 23 of the customized lattice structure 1 is different from the predetermined mechanical characteristic 20 and until the mechanical characteristic 23 of the customized lattice structure 1 corresponds to the predetermined mechanical characteristic 20, thereby updating the customized lattice configurations. The engine 54 is then configured to update the customized lattice structure 1 using the updated customized lattice configurations. For example, when one or more of the lattice configurations 100 for example comprise a user-defined grid structure 103 comprising a plurality of unit cells 104, the engine 54 is configured to generate customized grid structures 103 comprising a plurality of customized unit cells 104 when applying one or more of the updated user-defined design rules 200 onto the corresponding lattice configurations 100. The third receiver 53 optionally receives one or more production characteristics 24 for the customized lattice structure 1 and is configured to evaluate the mechanical characteristic 23 of the customized lattice structure 1 based on the production characteristics 24. The system 5 further comprises optionally a rendering unit 55 which receives the customized lattice structure 1 from the engine 54 and which is configured to generate a digital representation 30 of the customized lattice structure 1 and further configured to incorporate a render of the digital representation 30 in a web page of an HTML client 2 of client device 4, such as for example a web browser of a client device 4, and/or in a native application 3 of the client device 4. The client device 4 may for example be a computer desktop, and/or a laptop, and/or a tablet and/or a smartphone, and/or any other suitable electronic device. According to alternative embodiments, the first receiver 51, the second receiver 52, the third receiver 53, the engine 54 and the rendering unit 55 can be integrated together within one or more components of the system 5. For example, the technical functions of the first receiver 51 and of the second receiver 52 and of the third receiver 53 and of the engine 54 and of the rendering unit 55 can be performed by the engine 54. For example. the technical functions of the first receiver 51 and of the second receiver 52 and of the third receiver 53 and of the engine 54 and of the rendering unit 55 can be performed by the reinforcement learning kernel 6 of the system 5.

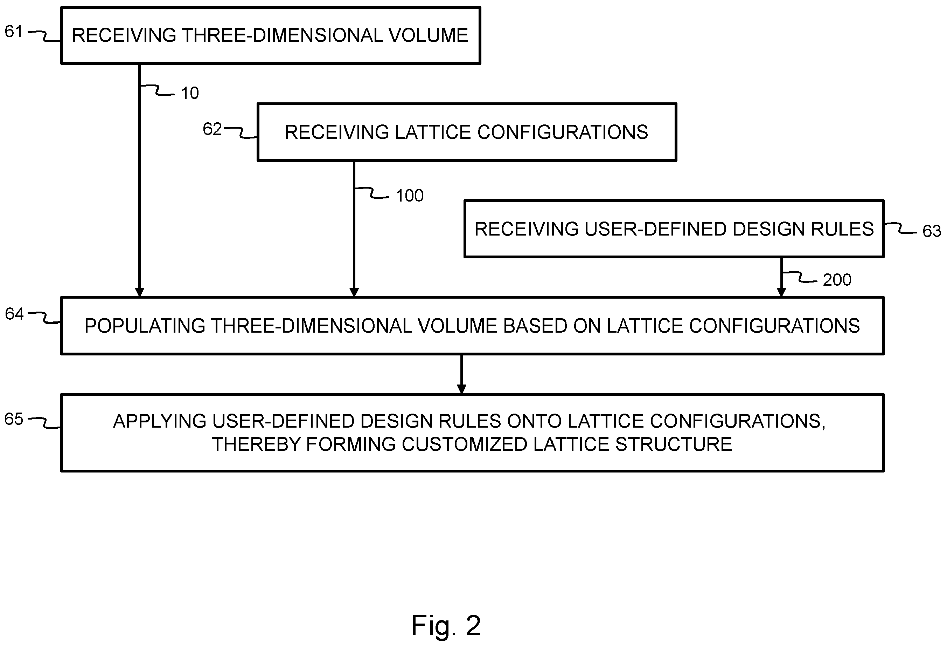

Fig. 2 shows the steps executed in an embodiment of the computer-implemented method for designing a customized lattice structure according to the present disclosure. In step 61, a three-dimensional volume 10 is received. In step 62, one or more lattice configurations 100 are received, wherein the lattice configurations 100 are configured to be arranged within, i.e. populate the three-dimensional volume 10. One or more of the lattice configurations 100 for example comprise a user-defined grid structure 103 comprising a plurality of unit cells 104. One or more of the lattice configurations 100 for example comprise a Voronoi-based lattice generation and/or a Delaunay-based lattice generation. In step 63, one or more user-defined design rules 200 are received, wherein the user-defined design rules 200 are configured to modify a type 101 and/or a geometry 102 of one or more of the lattice configurations 100. One or more mechanical forces 11 to be applied onto the lattice configurations 100 are received, as well as their respective locations 12 on the lattice configurations 100. The mechanical forces 11 comprise for example one or more of the following: one or more user-defined pressure maps; one or more user-defined shapes; one or more user-defined force fields; one or more digital representations of the mechanical forces 11. The mechanical forces 11 are applied to their respective locations 12. Displacements and stress values generated in the lattice configurations 100 by the mechanical forces 11 are determined at one or more points in time when the mechanical forces 11 are applied. Type derivatives and/or geometry derivatives for the lattice configurations are determined based on the displacements and the stress values. The user-defined design rules 200 are then generated, wherein each user-defined design rule 200 is configured to modify the type 101 of one or more of the lattice configurations 100 to the type derivative and/or to modify the geometry 102 of one or more of the lattice configurations 100 to the geometry derivative. One or more customized grid structures 103 comprising a plurality of customized unit cells 104 may be generated when applying one or more of the user-defined design rules 200 onto the corresponding lattice configurations 100. The customized grid structure 103 is for example regular throughout the three-dimensional volume 10 of the customized lattice structure 1. According to an alternative embodiment, the customized grid structure 103 is non-regular throughout the three-dimensional volume 10 of the customized lattice structure 1 and allows for a free flow population of the customized grid structure 103. The customized grid structure 103 may follow an outer surface 13 of the three-dimensional volume 10. In step 64, the three-dimensional volume 10 is populated based on the lattice configurations 100. In step 65, one or more user-defined design rules 200 are applied onto the populated lattice configurations 100, thereby generating customized lattice configurations and forming the customized lattice structure 1. Preferably, all the steps 61 to 65 of the method according to the present disclosure are performed by a reinforcement learning kernel. Once the customized lattice structure 1 is created, a digital representation 30 of the customized lattice structure 1 may be generated and a render of the digital representation 30 may be incorporated in a web page of an HTML client 2 and/or in a native application 3 of a client device 4. A predetermined mechanical characteristic 20 for the customized lattice structure 1 may be received. One or more lattice mechanical forces 21 to be applied onto the customized lattice structure 1 and their respective locations 22 on the customized lattice structure 1 may be received. The lattice mechanical forces 21 comprise for example one or more of the following: one or more user-defined pressure maps; one or more user-defined shapes; one or more user-defined force fields; one or more digital representations of the lattice mechanical forces 21. Once the customized lattice structure 1 is created, the lattice mechanical forces 21 may be mapped to the respective lattice locations 22 and displacements and stress values generated in the customized lattice structure 1 by the lattice mechanical forces 21 may be determined, thereby evaluating a mechanical characteristic 23 of the customized lattice structure 1. One or more production characteristics 24 may be received for the customized lattice structure 1 and may be taken into account when evaluating the mechanical characteristic 23 of the customized lattice structure 1. One or more of the user-defined design rules 200 may be updated, thereby generating one or more updated user-defined design rules 200, when the mechanical characteristic 23 of the customized lattice structure 1 is different from the predetermined mechanical characteristic 20 and until the mechanical characteristic 23 of the customized lattice structure 1 corresponds to the predetermined mechanical characteristic 20. One or more of the updated user-defined design rules 200 may be applied onto the customized lattice configurations, when the mechanical characteristic 23 of the customized lattice structure 1 is different from the predetermined mechanical characteristic 20 and until the mechanical characteristic 23 of the customized lattice structure 1 corresponds to the predetermined mechanical characteristic 20, thereby updating the customized lattice configurations. Finally, the customized lattice structure 1 is updated using the updated customized lattice configurations. Once the updated customized lattice structure 1 is created, a digital representation 30 of the updated customized lattice structure 1 may be generated and a render of the digital representation 30 may be incorporated in a web page of an HTML client 2 and/or in a native application 3 of a client device 4.

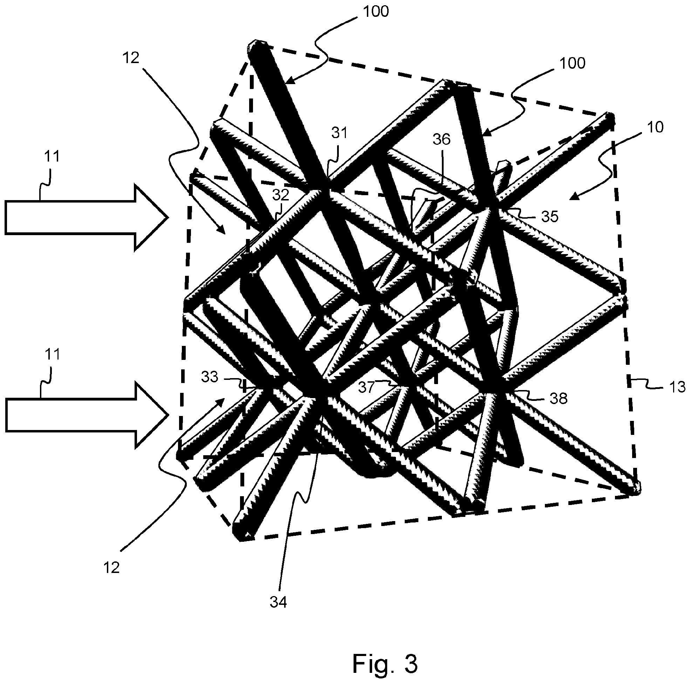

Fig. 3 illustrates an example embodiment of a three-dimensional volume 10 populated with two lattice configurations 100 according to the present disclosure. On Fig. 3, the three-dimensional volume 10 comprises an outer surface 13. The three-dimensional volume 10 is populated by 2x2x2 unit cells of one type of lattice configuration, wherein the unit cells are formed by crosses comprising the crosses 31;32;33;34 and the crosses 35;36;37;38. One lattice configuration 100 comprises the crosses 31;32;33;34 and another lattice configuration 100 comprises the crosses 35;36;37;38. Two mechanical forces 11 are received, wherein to each mechanical force 11 is associated a respective location 12 on the lattice configuration 100 comprising the crosses 31;32;33;34 where the force 11 is applied. The mechanical forces 11 are mapped to their respective locations 12 on the lattice configuration 100 comprising the crosses 31;32;33;34. Displacements and stress values generated by the mechanical forces 11 at the locations 12 in the lattice configuration 100 comprising the crosses 31;32;33;34 are determined over time. The computer-implemented method according to the present disclosure generates one user-defined design rule configured to modify a type 101 of the lattice configuration 100 comprising the crosses 31 ;32;33;34.

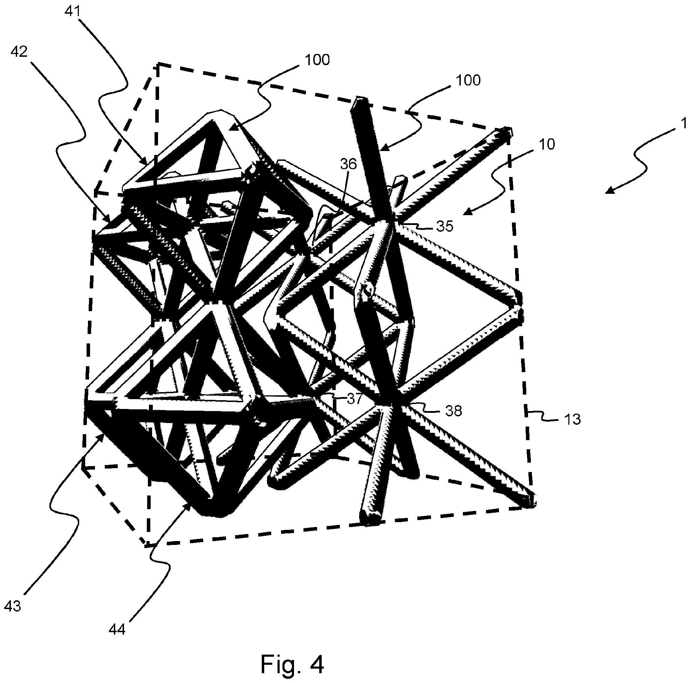

Fig. 4 illustrates an example embodiment of a customized lattice structure 1 corresponding to the three-dimensional volume 10 populated with two lattice configurations 100 of Fig. 3 onto which the two mechanical forces 11 were applied at their respective locations 12. On Fig. 4, the three-dimensional volume 10 of the customized lattice structure 1 comprises an outer surface 13 which is the same as the outer surface 13 of the three-dimensional volume 10 populated with two lattice configurations 100 of Fig. 3 before the mechanical forces 11 were applied. The three-dimensional volume 10 of the customized lattice structure 1 is populated by 2x2x2 unit cells of two types of lattice configurations. On Fig. 4, one lattice configuration 100 comprises tetrahedrons 41 ;42;43;44 and the other lattice configuration 100 comprises the crosses 35;36;37;38. One user-defined design rule was applied onto one of the lattice configurations of the three-dimensional volume 10 of Fig. 3, and the type 101 of this lattice configuration 100 is modified to the type derivative tetrahedron. In other words, the lattice configuration 100 comprising the crosses 31;32;33;34 of Fig. 3 was modified and replaced by the lattice configuration 100 comprising the tetrahedrons 41;42;43;44 of Fig. 4, for example to improve the stiffness of the customized lattice structure 1 at the respective locations 12 of the mechanical forces 11. The other lattice configuration 100 comprising the crosses 35;36;37;38 was not modified by the user-defined design rule and is identical to the lattice configuration 100 comprising the crosses 35;36;37;38 of Fig. 3. The computer-implemented method according to the present disclosure may further comprise the steps of receiving lattice mechanical forces and their respective lattice locations on the customized lattice structure 1 and may further determine displacements and stress values generated by these lattice mechanical forces in the customized lattice structure 1, thereby evaluating a mechanical characteristic of the customized lattice structure 1. The computer-implemented method according to the present disclosure may further comprise the steps of updating the user-defined design rule when the mechanical characteristic of the customized lattice structure 1 does not correspond to a predetermined mechanical characteristic for the customized lattice structure 1 and further comprise the step of updating the customized lattice structure 1 with updated customized lattice configurations.

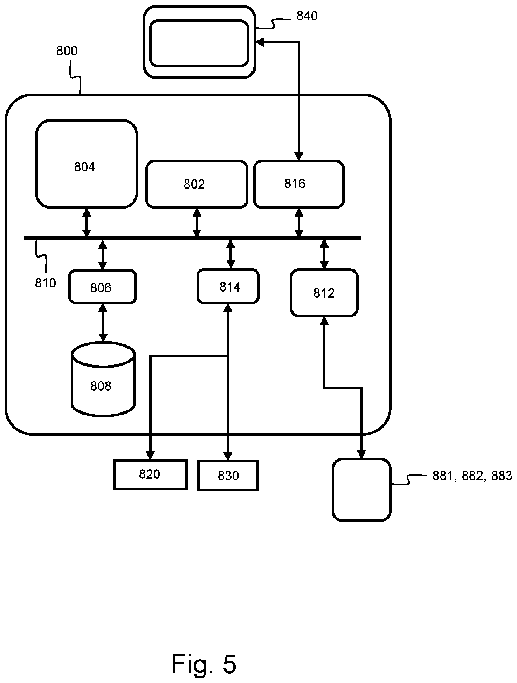

Fig. 5 shows a suitable computing system 800 enabling to implement embodiments of the system. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 881, 882, 883. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. It is noticed that the entire computer-implemented method according to the present invention can be executed centralized, e.g. on a server in a management center or in a cloud system, or it can be partially executed on a remote electronic device, e.g. worn by the user, and partially on a central server. Computing system 800 could thus correspond to the system available centrally or the processing system available in the electronic device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for designing a customized lattice structure (1) for digital manufacturing, wherein said computer-implemented method comprises the steps of:
- receiving a three-dimensional volume (10);
- receiving one or more lattice configurations (100) configured to fill said three-dimensional volume (10);
- receiving one or more user-defined design rules (200) configured to modify a type (101) and/or a geometry (102) of said lattice configurations (100);
- populating said three-dimensional volume (10) based on said lattice configurations (100); and
- applying one or more of said user-defined design rules (200) onto said populated lattice configurations (100), thereby generating customized lattice configurations and forming said customized lattice structure (1).

2. A computer-implemented method according to claim 1, wherein said computer-implemented method further comprises the steps of:
- receiving one or more mechanical forces (11) to be applied onto said lattice configurations (100) and respective locations (12) on said lattice configurations (100) ;
- mapping said mechanical forces (11) to their respective locations (12);
- determining displacements and stress values generated in said lattice configurations (100) by said mechanical forces (11);
- determining type derivatives and/or geometry derivatives for said lattice configurations (100) based on said displacements and said stress values; and
- generating said user-defined design rules (200), wherein each user-defined design rule (200) is configured to:
∘ modify said type (101) of one or more of said lattice configurations (100) to said type derivative; and/or
∘ modify said geometry (102) of one or more of said lattice configurations (100) to said geometry derivative.

3. A computer-implemented method according to any of the preceding claims, wherein said computer-implemented method further comprises the steps of:
- receiving a predetermined mechanical characteristic (20) for said customized lattice structure (1);
- receiving one or more lattice mechanical forces (21) to be applied onto said customized lattice structure (1) and respective lattice locations (22) on said customized lattice structure (1);
- mapping said lattice mechanical forces (21) to their respective lattice locations (22);
- determining displacements and stress values generated in said customized lattice structure (1) by said lattice mechanical forces (21), thereby evaluating a mechanical characteristic (23) of said customized lattice structure (1);
- updating one or more of said user-defined design rules (200) and applying said updated user-defined design rules onto said customized lattice configurations when said mechanical characteristic (23) of said customized lattice structure (1) is different from said predetermined mechanical characteristic (20), until said mechanical characteristic (23) of said customized lattice structure (1) corresponds to said predetermined mechanical characteristic (20), thereby updating said customized lattice configurations; and
- updating said customized lattice structure (1) using said updated customized lattice configurations.

4. A computer-implemented method according to claim 3, wherein said computer-implemented method further comprises the steps of:
- receiving one or more production characteristics (24) for said customized lattice structure (1); and
- evaluating said mechanical characteristic (23) of said customized lattice structure (1) based on said production characteristics (24).

5. A computer-implemented method according to claim 2 and 3 or 4, wherein said mechanical forces (11) and/or said lattice mechanical forces (21) comprise one or more of:
- user-defined pressure maps;
- user-defined shapes;
- user-defined force fields;
- user-defined digital representations of said mechanical forces and/or of said lattice mechanical forces.

6. A computer-implemented method according to any of the preceding claims, wherein one or more of said lattice configurations (100) comprise a user-defined grid structure (103) comprising a plurality of unit cells (104); and wherein said computer-implemented method further comprises the step of generating customized grid structures (103) comprising a plurality of customized unit cells (104) when applying said user-defined design rules (200) onto said lattice configurations (100).

7. A computer-implemented method according to claim 6, wherein said customized grid structure (103) is regular throughout said three-dimensional volume (10) of said customized lattice structure (1).

8. A computer-implemented method according to claim 6, wherein said customized grid structure (103) is non-regular throughout said three-dimensional volume (10) of said customized lattice structure (1) and allows for a free flow population of said customized grid structure (103).

9. A computer-implemented method according to any of the claims 6 to 8, wherein said customized grid structure (103) follows an outer surface (13) of said three-dimensional volume (10).

10. A computer-implemented method according to any of the claims 1 to 5, wherein one or more of said lattice configurations (100) comprise a Voronoi-based lattice generation and/or a Delaunay-based lattice generation.

11. A computer-implemented method according to any of the preceding claims, wherein said computer-implemented method further comprises the steps of:
- generating a digital representation (30) of said customized lattice structure (1); and
- incorporating a render of said digital representation (30) in a web page of an HTML client (2) and/or in a native application (3) of a client device (4).

12. A system (5) for designing a customized lattice structure for digital manufacturing, wherein said computer-implemented method comprises the steps of:
- receiving a three-dimensional volume (10);
- receiving one or more lattice configurations (100) configured to fill said three-dimensional volume (10);
- receiving one or more user-defined design rules (200) configured to modify a type (101) and/or a geometry (102) of said lattice configurations (100);
- populating said three-dimensional volume (10) based on said lattice configurations (100); and
- applying one or more of said user-defined design rules (200) onto said populated lattice configurations (100), thereby generating customized lattice configurations and forming said customized lattice structure (1).

13. A system according to claim 12, wherein said system (5) comprises a reinforcement learning kernel (6).

14. A computer program product comprising computer-executable instructions for causing a system to perform at least the following:
- receiving a three-dimensional volume (10);
- receiving one or more lattice configurations (100) configured to fill said three-dimensional volume (10);
- receiving one or more user-defined design rules (200) configured to modify a type (101) and/or a geometry (102) of said lattice configurations (100);
- populating said three-dimensional volume (10) based on said lattice configurations (100); and
- applying one or more of said user-defined design rules (200) onto said populated lattice configurations (100), thereby generating customized lattice configurations and forming said customized lattice structure (1).

15. A computer readable storage medium comprising computer-executable instructions for performing the following steps when the program is run on a computer:
- receiving a three-dimensional volume (10);
- receiving one or more lattice configurations (100) configured to fill said three-dimensional volume (10);
- receiving one or more user-defined design rules (200) configured to modify a type (101) and/or a geometry (102) of said lattice configurations (100);
- populating said three-dimensional volume (10) based on said lattice configurations (100); and
- applying one or more of said user-defined design rules (200) onto said populated lattice configurations (100), thereby generating customized lattice configurations and forming said customized lattice structure (1).
